# FASCICULE DE BREVET EUROPEEN

(11) **EP 0 655 747 B1**
(45) Date de publication et mention de la délivrance du brevet: **19.03.1997**
(21) Numéro de dépôt: 94402538.6
(22) Date de dépôt: 09.11.1994
(51) Int. Cl.: G21C 17/00, G21C 7/08

(54) **Dispositif et procédé de contrôle des éléments de guidage d'un tube-guide des équipements internes supérieurs d'un réacteur nucléaire à eau sous pression**
Vorrichtung und Verfahren zum Überprüfen der Führungselemente eines Führungsrohrs in den oberen Einbauten eines Druckwasserkernreaktors
Apparatus and method for inspecting the guiding elements of a guide thimble in the upper internals of a pressurized water reactor

(30) Priorité: 25.11.1993 FR 9314119
(43) Date de publication de la demande: 31.05.1995
(73) Titulaire: FRAMATOME, 92400 Courbevoie (FR)
(72) Inventeur: Cartry,Jean-Pierre, F-69003 Lyon (FR)
(74) Mandataire: Bouget, Lucien

(56) Documents cités:
- EP-A- 0 316 631
- EP-A- 0 390 637
- EP-A- 0 583 187
- FR-A- 2 304 149
- PATENT ABSTRACTS OF JAPAN vol. 11, no. 68 (P-553) 28 Février 1987 & JP-A-61 231 404 (KOBE STEEL) 15 Octobre 1986

## Description

L'invention concerne un dispositif de contrôle des éléments de guidage d'un tube-guide des équipements internes supérieurs d'un réacteur nucléaire à eau sous pression.

Les réacteurs nucléaires à eau sous pression comportent, à l'intérieur d'une cuve, le coeur du réacteur nucléaire constitué par des assemblages de forme prismatique disposés avec leur axe vertical et, au-dessus du coeur, des équipements internes supérieurs comportant en particulier un ensemble de tubes-guides verticaux permettant d'assurer le guidage de barres de commande constituées par des faisceaux de crayons placés parallèlement les uns aux autres et renfermant un matériau absorbant les neutrons.

Les tubes-guides des équipements internes supérieurs comportent des éléments de guidage discontinus constitués par des plaques planes appelées cartes de guidage percées d'ouvertures et des moyens de guidage continus constitués par des fourreaux et des tubes fendus placés dans la direction verticale du tube, les ouvertures des plaques et les alésages des moyens de guidage continus se trouvant dans des positions correspondant aux positions des crayons absorbants dans le faisceau de la barre de commande.

Les ouvertures traversant les cartes de guidage et les alésages des fourreaux et des tubes fendus constituant les éléments de guidage des crayons absorbants présentent des fentes latérales les mettant en communication avec un alésage libre ménagé à la partie centrale du tube-guide et permettant le passage d'un pommeau d'assemblage de la grappe de crayons absorbants parallèles.

Pour assurer la commande du réacteur par réglage de la réactivité du coeur, les grappes de crayons absorbants sont déplacées dans la direction verticale, pendant le fonctionnement du réacteur, de manière que les crayons absorbants soient introduits sur une hauteur plus ou moins importante à l'intérieur de certains assemblages du coeur. Au cours de leur déplacement dans la direction verticale, les crayons absorbants des barres de commande sont guidés chacun par une série d'ouvertures alignées des cartes de guidage et par l'alésage interne d'un fourreau de guidage ou d'un tube fendu.

Après un certain temps de fonctionnement du réacteur nucléaire, les ouvertures des cartes de guidage et les alésages des fourreaux et des tubes fendus peuvent présenter une usure se traduisant par exemple par une ovalisation de la section de l'ouverture ou de l'alésage, si bien que le guidage des crayons absorbants n'est plus réalisé de manière tout-à-fait satisfaisante.

Il est donc nécessaire d'effectuer des mesures et des contrôles périodiques sur les éléments de guidage des équipements internes supérieurs du réacteur nucléaire, pour déterminer si certains de ces éléments de guidage doivent être remplacés ou réparés.

Le contrôle des éléments de guidage doit être effectué pendant une période d'arrêt pour contrôle, réparation et/ou rechargement du réacteur nucléaire, au cours de laquelle les équipements internes supérieurs sont extraits de la cuve et disposés dans le fond de la piscine du réacteur, sur un stand de stockage et d'intervention.

Il est nécessaire d'effectuer des mesures extrêmement précises sur les éléments de guidage des équipements internes supérieurs, dans la mesure où l'usure de ces éléments de guidage nécessitant une réparation ou un remplacement se traduit par des différences faibles entre les dimensions des ouvertures ou alésages des éléments de guidage dans différentes directions transversales.

On a proposé dans la demande de brevet EP-A-0.390.637 déposée par la société FRAMATOME, d'effectuer ces contrôles à partir de mesures comparatives de capacité de condensateurs constitués par des armatures réparties autour de l'axe d'un capteur qui est déplacé de manière sensiblement coaxiale à l'intérieur des éléments de guidage. De préférence, le dispositif de contrôle peut être réalisé sous la forme d'une grappe analogue à une grappe de commande qui peut être déplacée à l'intérieur d'un tube-guide. Les crayons absorbants de la grappe de commande sont remplacés par des barres cylindriques de direction axiale en deux parties entre lesquelles est intercalée une sonde de mesure constituée par des armatures de condensateurs réparties autour de l'axe de la sonde.

Un tel dispositif peut être amené par un porteur se déplaçant sur le fond de la piscine du réacteur, en-dessous des équipements internes supérieurs, à l'aplomb d'un tube-guide. Une perche manoeuvrée depuis le niveau supérieur de la piscine peut être engagée dans le tube-guide puis dans le pommeau d'accrochage de la grappe de contrôle, de manière à déplacer la grappe de contrôle dans la direction axiale à l'intérieur du tube-guide, dans la direction verticale et de bas en haut.

On peut ainsi effectuer le contrôle des éléments de guidage des équipements internes supérieurs sans avoir à faire pénétrer le dispositif de contrôle par le dessus des équipements internes en position sur leur stand de contrôle.

Cependant, la précision du contrôle obtenu en utilisant des sondes à mesure de capacité peut être insuffisante dans certains cas et le traitement des mesures peut présenter certaines difficultés.

On a proposé dans le JP-A-61 231404, un procédé et un dispositif de contrôle d'une couche de revêtement sur la surface interne d'un tube d'échangeur de chaleur utilisant un rayon laser qui est dirigé par un miroir tournant sur la surface interne du tube, de manière à effectuer un balayage circonférentiel de la surface du tube. La lumière réfléchie par la surface interne du tube est reçue par une cellule photoélectrique dont le signal électrique de sortie est traité et analysé. Un tel procédé qui permet d'obtenir une bonne précision lors du contrôle n'a jamais été appliqué au contrôle des éléments de guidage de tubes-guides d'un réacteur nucléaire.

Dans la demande antérieure EP-A-0 583 187 publiée le 16.0294 et correspondant à la demande FR-A-92-09915, est proposé un dispositif de contrôle comportant une perche sur laquelle sont montés des bras pivotants qui constituent des supports de sondes rotatives permettant de mettre en place successivement les sondes rotatives dans chacun des éléments de guidage à contrôler. Un tel dispositif est complexe et présente des éléments mobiles qui peuvent être détériorés au cours de leur utilisation dans la piscine du réacteur.

Le dispositif selon l'invention tel que décrit dans la revendication 1 permet de remédier aux inconvénients des dispositifs selon l'art antérieur.

Afin de bien faire comprendre l'invention, on va maintenant décrire à titre d'exemple non limitatif, en se référant aux figures jointes en annexe, deux modes de réalisation d'un dispositif suivant l'invention et sa mise en oeuvre pour le contrôle d'équipements internes supérieurs de réacteur nucléaire.

La figure 1 est une vue en élévation des équipements internes supérieurs d'un réacteur nucléaire en position sur un stand de stockage dans la piscine d'un réacteur, pendant une opération de contrôle des éléments de guidage.

La figure 2 est une vue en élévation d'un tube-guide des équipements internes supérieurs représentés sur la figure 1.

La figure 3 est une vue en plan d'une carte de guidage du tube-guide représenté sur la figure 2.

La figure 4 est une vue en coupe transversale des éléments de guidage continus du tube-guide représenté sur la figure 2.

La figure 5 est une vue en élévation d'un chariot porteur de la grappe de contrôle du dispositif suivant l'invention.

La figure 6 est une vue en élévation de la grappe de contrôle du dispositif suivant l'invention.

La figure 7 est une vue en coupe transversale suivant 7-7 de la figure 6.

La figure 8 est une vue en élévation montrant un dispositif de contrôle suivant l'invention comportant une sonde tournante, constituant un radar laser.

La figure 9 est une vue en plan d'une carte de guidage, analogue à la carte représentée sur la figure 3, montrant les positions des sondes d'une grappe de contrôle telle que représentée sur les figures 6 et 7, pendant le contrôle des éléments de guidage.

La figure 9A est une vue à grande échelle, en coupe suivant A-A de la figure 9B, d'une partie de la carte de guidage représentée sur la figure 9 et d'une sonde en position de contrôle d'une ouverture de guidage de la carte.

La figure 9B est une vue suivant B de la figure 9A.

La figure 10 est une vue en coupe transversale, analogue à la vue de la figure 7, d'une variante de réalisation de la grappe de contrôle d'un dispositif suivant l'invention.

La figure 11 est une vue en plan d'une carte de guidage analogue à la vue de la figure 3 montrant les positions des sondes d'une grappe de contrôle telle que représentée sur la figure 10, pendant le contrôle des éléments de guidage.

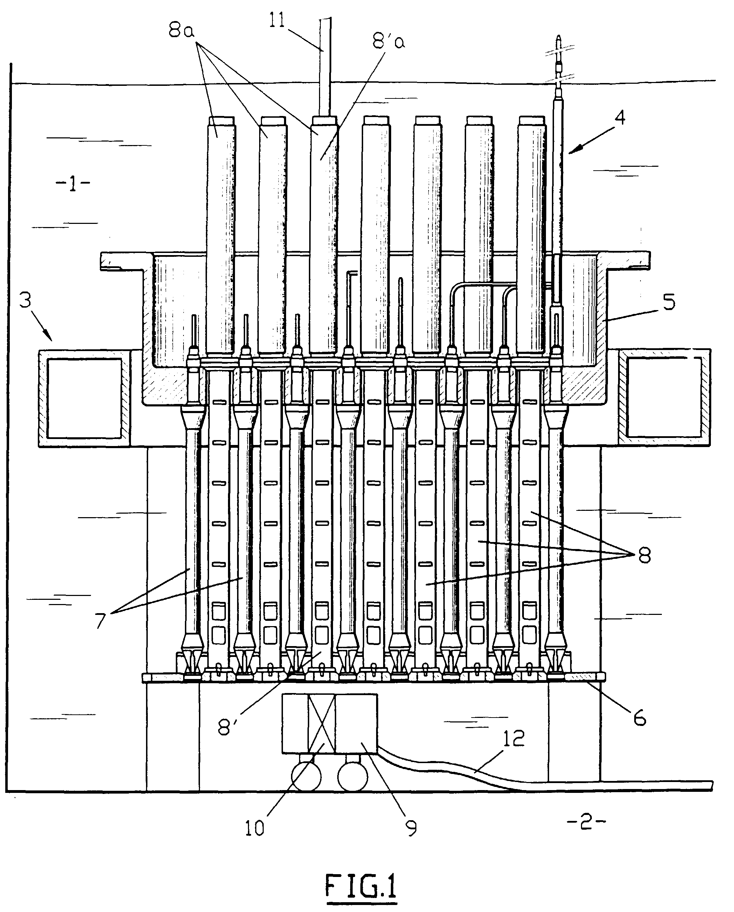

Sur la figure 1, on voit une partie de la piscine 1 d'un réacteur nucléaire dans laquelle est disposé un stand de contrôle 3 des équipements internes 4 du réacteur nucléaire.

Les équipements internes supérieurs 4 comportent une plaque supérieure 5 et une plaque inférieure 6 constituant la plaque supérieure du coeur du réacteur nucléaire venant en appui sur l'extrémité supérieure des assemblages combustibles, lorsque les équipements internes supérieurs 4 sont en position de service dans la cuve du réacteur.

Les équipements internes 4 comportent de plus un ensemble de tubes-guides 8 reliés à la plaque supérieure 5 et à la plaque inférieure 6 des équipements internes et comportant chacun une première partie intercalée entre la plaque supérieure 5 et la plaque inférieure 6 et une seconde partie 8a fixée au-dessus de la plaque supérieure 5.

Des colonnes-entretoises 7 disposées entre les plaques 5 et 6, parallèlement aux tubes 8, permettent de maintenir les plaques 5 et 6 et d'assurer la rigidité des équipements internes 4.

Lors d'un arrêt du réacteur pour réparation et rechargement, les équipements internes 4 sont extraits de la cuve du réacteur et disposés sur le stand de stockage 3, les équipements internes 4 venant reposer par l'intermédiaire de la plaque supérieure 5 sur des supports verticaux du stand 3.

La piscine 1 est remplie d'eau jusqu'à son niveau supérieur et l'intervention est réalisée depuis un pont-passerelle disposé au-dessus du niveau supérieur de la piscine 1.

Le dispositif d'intervention suivant l'invention comporte en particulier une grappe de contrôle 10 qui peut être déplacée par un chariot porteur 9 sur le fond de la piscine et une perche 11 de grande longueur qui peut être manipulée depuis le pont-passerelle de la piscine pour être mise en place à l'intérieur d'un tube-guide 8 quelconque pour venir en prise avec la grappe de contrôle 10 et assurer son déplacement dans la direction verticale et de bas en haut à l'intérieur du tube 8.

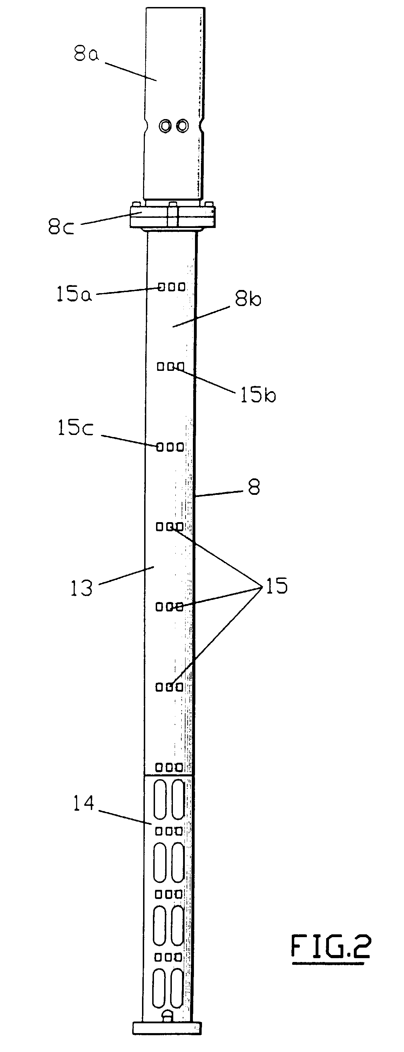

Sur la figure 2, on a représenté un tube-guide 8 des équipements internes 4 représentés sur la figure 1.

Le tube-guide 8 comporte la partie supérieure 8a et une partie inférieure 8b qui sont reliées entre elles par des moyens d'assemblage 8c comportant des brides rapportées l'une sur l'autre et fixées par des vis.

La partie supérieure 8a du tube-guide 8 est destinée à venir se placer au-dessus de la plaque supérieure 5 des équipements internes supérieurs et la partie inférieure 8b entre la plaque supérieure 5 et la plaque inférieure 6.

Les deux parties 8a et 8b du tube-guide comportent une enveloppe externe cylindrique qui est percée d'ouvertures et qui renferme des éléments de guidage.

La partie inférieure 8b qui constitue la partie principale de guidage du tube 8 comporte elle-même une partie supérieure 13 constituant la partie de guidage discontinu et une partie inférieure 14 constituant la partie de guidage continu des barres de commande.

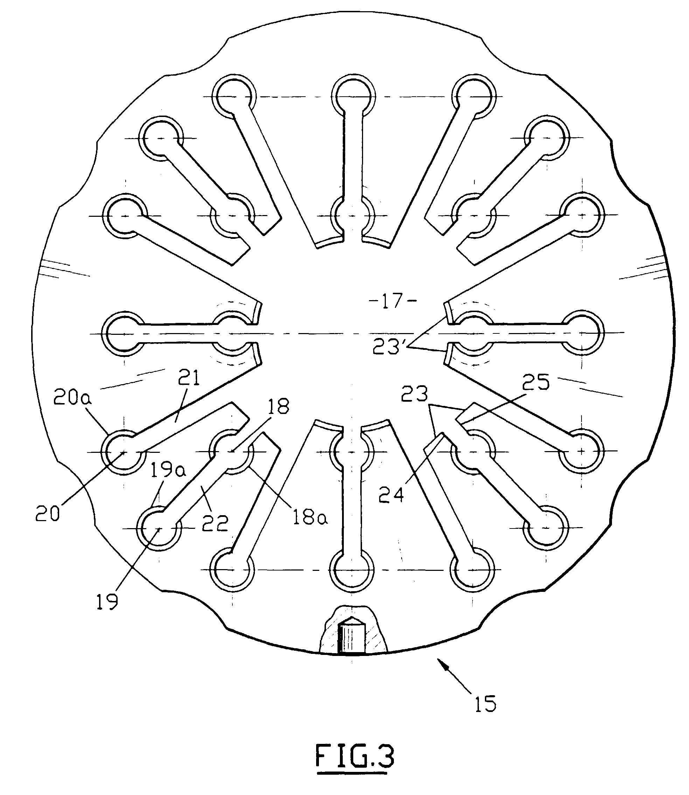

Dans la partie de guidage discontinu 13, l'enveloppe externe du tube-guide 8 renferme des cartes de guidage 15 telles que représentées sur la figure 3, dans des emplacements successifs 15a, 15b, 15c, ..., régulièrement espacés suivant la longueur de la partie 13 de la section inférieure 8b du tube 8.

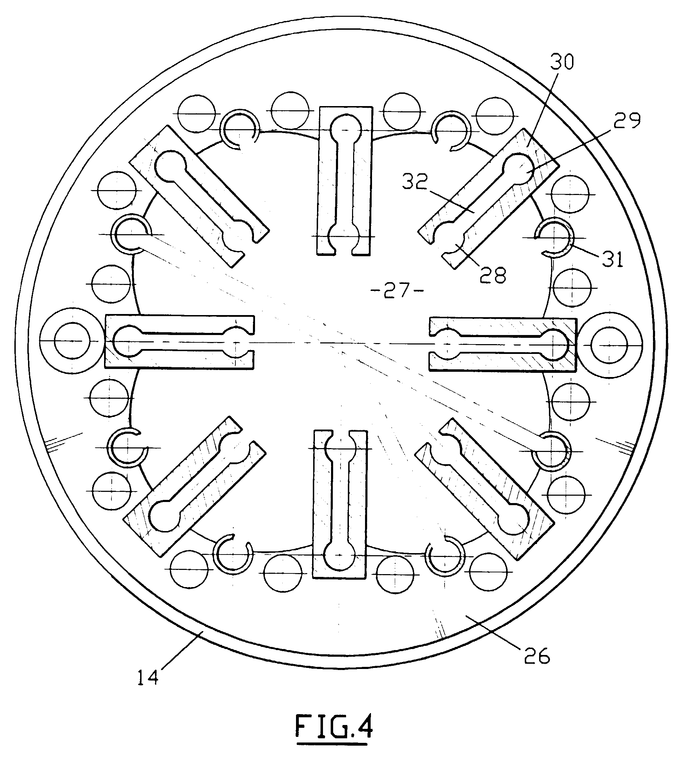

Suivant toute la longueur de la partie de guidage continu 14 de la section inférieure 8b du tube-guide sont disposés des éléments de guidage continus tels que représentés sur la figure 4.

Les plaques de guidage discontinu ou cartes de guidage 15 telles que représentées sur la figure 3 sont constituées par des plaques métalliques découpées de manière à ménager un espace libre 17 à la partie centrale de la carte 15 et des ouvertures de guidage telles que 18, 19 et 20 des crayons absorbants de la barre de commande qui peut être introduite et guidée dans le tube-guide renfermant des cartes de guidage 15.

Les ouvertures telles que 20 sont disposées à l'extrémité d'une fente 21 traversant la carte de guidage 15 et débouchant dans l'espace libre central 17.

Les ouvertures telles que 18 et 19 sont alignées suivant une fente 22 débouchant également dans l'espace libre central 17.

De cette manière, toutes les ouvertures de guidage 18, 19 et 20 de la carte de guidage 15 débouchent dans l'espace libre central 17.

La partie des ouvertures 18 communiquant avec l'espace libre central 17 présente des surfaces circonférentielles 23 ou 23' et des surfaces de direction radiale 24 et 25.

Certaines de ces surfaces peuvent être revêtues d'une pièce ou d'une couche anti-usure.

Les surfaces telles que 23, 23', 24 et 25 qui ne subissent pas d'usure notable par frottement pendant l'utilisation des barres de commande peuvent être utilisées comme surfaces de référence lors du contrôle.

Sur la figure 4, on voit en section la partie de guidage continu 14 du tube-guide 8 qui comporte à l'intérieur de l'enveloppe cylindrique de la section 8b du tube-guide un support 26 comportant un alésage central de direction axiale définissant un espace libre 27 dans le prolongement de l'espace libre 17, à l'intérieur du tube-guide, les espaces libres 17 des cartes de guidage et l'espace libre 27 du guidage continu constituant l'alésage central du tube-guide.

Les éléments de guidage continu sont fixés sur le support 26 et sont constitués par des fourreaux de guidage 30 et des tubes fendus 31 disposés dans la direction axiale du tube-guide 6.

Chacun des fourreaux de guidage 30 délimite deux alésages de guidage 28 et 29 reliés entre eux par une fente 32 et débouchant dans l'espace libre 27.

Les tubes 31 comportent une fente dirigée vers l'espace libre central 27. Les alésages de guidage 28 et 29 des fourreaux 30 et les tubes fendus 31 communiquent tous avec l'alésage libre central du tube-guide.

Les ouvertures 18, 19 et 20 des cartes de guidage sont disposées de manière à reproduire en section transversale le réseau des tubes-guides d'un assemblage du coeur du réacteur nucléaire dans lesquels sont introduits les crayons absorbants d'une barre de commande.

En outre, les cartes de guidage 15 sont disposées parallèlement les unes aux autres dans des positions telles que les ouvertures des différentes cartes successives soient alignées pour constituer des canaux de guidage de direction axiale.

Les alésages de guidage 28 et 29 des fourreaux 30 et les alésages des tubes 31 sont d'autre part également disposés de manière à reproduire le réseau des tubes-guides d'un assemblage combustible du réacteur nucléaire.

Les alésages 28, 29, 31 des éléments 14 de guidage continu sont alignés avec les séries d'ouvertures 18, 19, 20 des cartes de guidage 15, suivant les directions axiales de guidage.

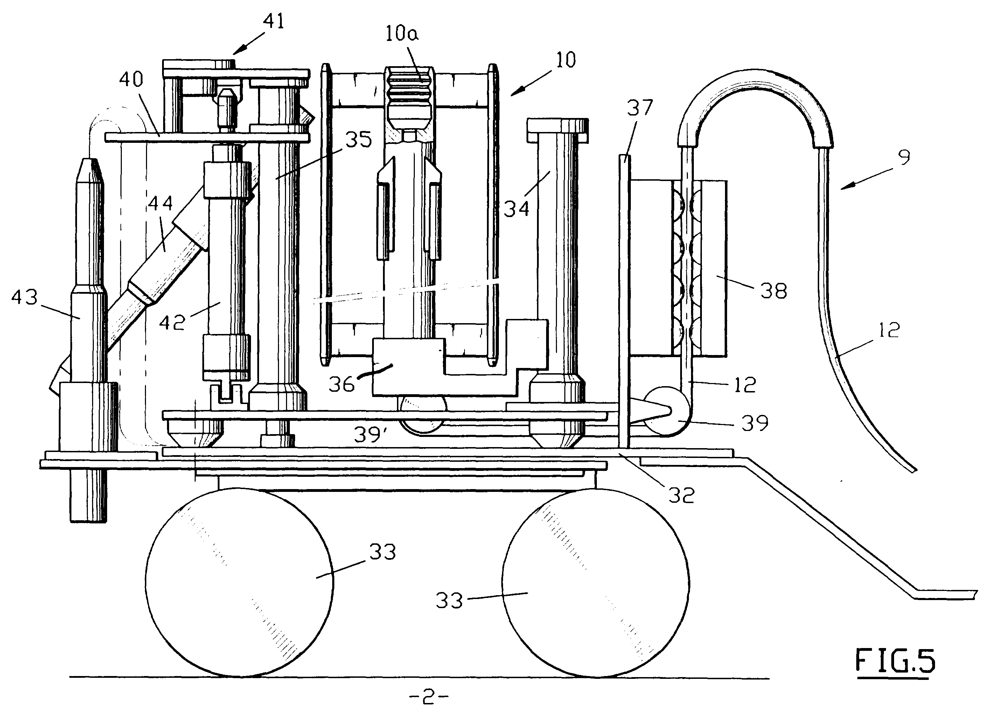

Sur la figure 5, on a représenté à plus grande échelle et plus en détail le chariot porteur 9 de la grappe de contrôle 10 du dispositif suivant l'invention qui peut être déplacée sur le fond 2 de la piscine 1, de manière à venir dans le prolongement axial d'un tube-guide quelconque 8 des équipements internes 4 en position sur leur stand de contrôle 3.

Le chariot porteur 9 qui est d'un type couramment utilisé dans le cadre des opérations de maintenance à l'intérieur de la piscine d'un réacteur nucléaire comporte des roues 33 reposant sur le fond 2 de la piscine et des moyens moteurs non représentés permettant de commander à distance et de manière très précise les déplacements du chariot porteur 9 sur le fond de la piscine.

Sur le plateau 32 du chariot 9, sont fixées deux colonnes verticales 34 et 35.

Sur la colonne 34 est monté mobile dans la direction verticale un chariot support 36 de la grappe de contrôle 10. Le chariot support 36 comporte un logement de réception de la partie inférieure de la grappe de contrôle 10 permettant de la maintenir dans une position verticale et des moyens moteurs de déplacement suivant la direction axiale de la colonne 34.

Le chariot 9 comporte un montant vertical 37 sur lequel est monté un tireur-pousseur 38 permettant d'assurer le déplacement dans un sens ou dans l'autre d'un ensemble de câbles 12 relié à la grappe de contrôle 10 et assurant l'alimentation des sondes et le recueil des mesures, pendant les déplacements de la grappe de contrôle 10 à l'intérieur d'un tube-guide, dans un sens ou dans l'autre. On exerce ainsi constamment une tension sur l'ensemble de câbles 12 pendant les déplacements de la grappe de contrôle 10, ce qui permet d'éviter aux câbles de s'enrouler ou de se plier et de bloquer les déplacements du support de sonde.

L'ensemble de câbles 12 est d'autre part guidé par des poulies 39 et 39'.

Sur la colonne 35 est engagée à glissement une plaque 40 portant une tête de centrage et de positionnement 41 du chariot 9 qui est reliée à l'extrémité de la tige d'un vérin 42 fixé sur le plateau du chariot.

La tête de centrage 41 comporte des ouvertures qui peuvent être engagées, par déplacement de la tête 41 dans la direction verticale, sur des pions de positionnement d'assemblages combustibles en saillie sous la plaque inférieure 6 des équipements internes supérieurs 4.

La plaque inférieure 6 des équipements internes supérieurs 4 constitue en effet la plaque supérieure du coeur du réacteur qui vient en appui sur les parties supérieures des assemblages combustibles du coeur et qui comporte des pions de centrage et de positionnement destinés à venir s'engager dans des ouvertures des embouts supérieurs des assemblages combustibles.

Lorsque les équipements internes supérieurs 4 sont en position sur leur stand de stockage, comme représenté sur la figure 1, les pions de centrage de la plaque supérieure de coeur 6 sont saillants à la partie inférieure des équipements internes, au-dessus du fond 2 de la piscine.

Le chariot porteur 9 peut être mis en place sous les équipements internes supérieurs dans une position telle que la grappe de contrôle 10 se trouve sensiblement à l'aplomb d'un tube-guide dans lequel on désire réaliser le contrôle.

La mise en place du chariot porteur 9 est assurée grâce à une première caméra vidéo 43 permettant de fournir une image du fond 2 de la piscine sur lequel sont tracés des repères de position sous la forme d'un quadrillage correspondant à la position des tubes-guides des équipements internes supérieurs sur leur stand de contrôle.

On peut ainsi arrêter le chariot porteur, lors de ses déplacements sous les équipements internes supérieurs à un endroit tel que la grappe de contrôle 10 se trouve à l'aplomb du tube-guide dans lequel on désire effectuer le contrôle.

La mise en place précise du chariot porteur 9 et de la grappe de contrôle 10 sous les équipements internes supérieurs du réacteur est complétée par engagement des ouvertures de la tête de centrage 41 sur des pions de guidage de la plaque supérieure de coeur, de telle sorte que la position du chariot 9 soit parfaitement fixée par rapport aux équipements internes supérieurs.

Une seconde caméra vidéo 44 permet de vérifier que la perche de saisie de la grappe de contrôle 10 qui est introduite dans le tube-guide depuis le niveau supérieur de la piscine pénètre bien dans la partie supérieure 10a de la grappe de contrôle 10 constituant un pommeau analogue au pommeau d'une grappe de commande.

La perche de saisie de la grappe de contrôle 10 peut être constituée par une tige telle qu'un prolongateur d'une grappe de commande comportant des moyens d'assemblage standard au pommeau 10a.

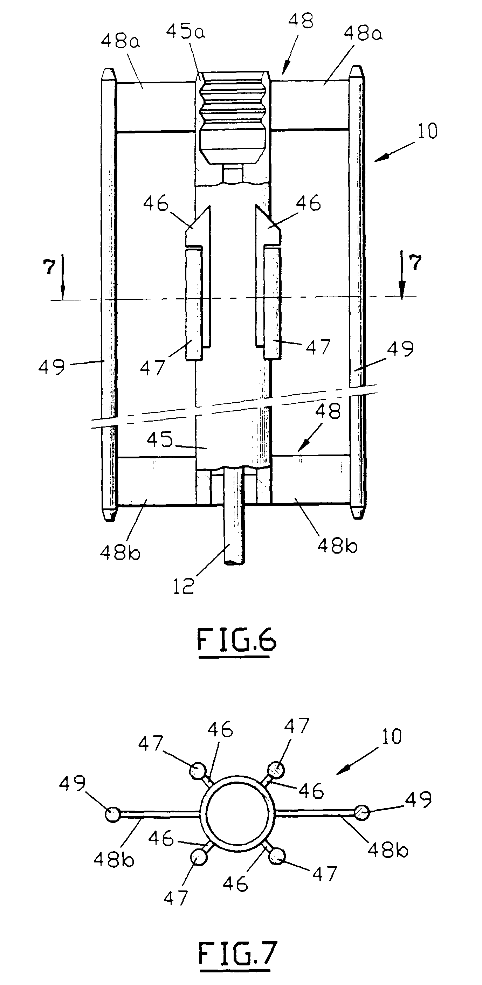

Sur les figures 6 et 7, on voit un premier mode de réalisation de la grappe de contrôle 10 suivant l'invention.

La grappe de contrôle 10 comporte un corps de forme tubulaire 45 dont une extrémité 45a est usinée intérieurement selon un profil d'assemblage de type classique pour constituer le pommeau 10a analogue au pommeau d'une barre de commande de la réactivité du coeur du réacteur nucléaire.

Le profil intérieur de la partie 45a du corps cylindrique 45 permet de réaliser l'assemblage et la fixation à distance de la partie d'extrémité d'une tige de commande ou prolongateur, à la grappe de contrôle 10.

Sur la surface externe de forme cylindrique du corps tubulaire 45 sont fixés quatre bras 46, dans des directions radiales du corps cylindrique 45 et dans des dispositions sensiblement à 90° les unes des autres autour de l'axe du corps tubulaire 45.

A l'extrémité de chacun des bras 46 est montée une sonde de mesure de distance 47, dans une disposition parallèle à l'axe du corps cylindrique 45. Les sondes 47 de forme cylindrique sont montées rotatives autour de leur axe parallèle à l'axe du corps tubulaire 45 ou comportent seulement une partie rotative autour de leur axe.

L'ensemble de câbles 12 d'alimentation des sondes et de recueil des signaux de mesure est engagé axialement dans l'alésage du corps tubulaire 45.

La grappe de contrôle 10 comporte en plus des bras de direction radiale 46 servant de supports aux sondes de mesure 47, deux paires de bras de direction radiale 48 de longueur supérieure aux bras 46 à l'extrémité desquels sont fixées des barres cylindriques 49 constituant des moyens de guidage de la grappe de contrôle 10, lors de ses déplacements à l'intérieur d'un tube-guide des équipements internes supérieurs.

Les barres cylindriques 49 présentent un diamètre extérieur identique au diamètre des crayons absorbants d'une grappe de commande de la réactivité du coeur du réacteur.

Comme il est visible sur la figure 6, les bras de direction radiale 48 constituent deux ensembles de deux bras 48a et 48b disposés et fixés à chacune des extrémités du corps 45, dans le prolongement l'un de l'autre et sensiblement suivant un plan bissecteur de l'un des dièdres formés par les bras 46 de support des sondes de mesure.

La longueur du corps cylindrique 45 de la grappe de contrôle 10 et des barres de guidage 49 est supérieure à la longueur axiale de l'espace séparant deux cartes 15 successives d'un tube-guide, de manière que pendant les déplacements de la grappe de contrôle 10 à l'intérieur du tube-guide, les barres de guidage 49 se trouvent toujours en prise avec au moins deux cartes de guidage successives.

De cette manière, la grappe de contrôle reste toujours parfaitement centrée et parfaitement guidée à l'intérieur du tube-guide.

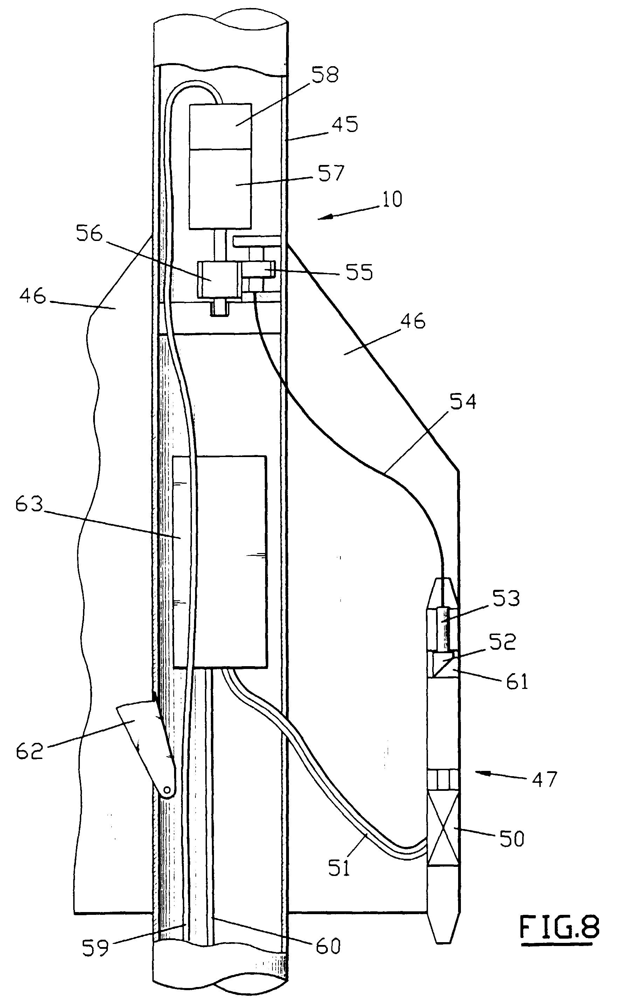

Sur la figure 8, on a représenté plus en détail la partie centrale de la grappe de contrôle 10, dans une zone comportant les bras de direction radiale 46 constituant les supports des sondes 47.

Pour plus de clarté, sur la figure 8, on n'a représenté qu'un seul bras 46 et une seule sonde 47.

Selon un mode de réalisation préférentiel, la sonde 47 constituant un capteur de mesure de distance est réalisée sous la forme d'un radar laser permettant la mesure de très faibles distances qui peuvent être très inférieures au millimètre, avec une très grande précision.

Le procédé de mesure optique de distance entre une cible et un point déterminé, par radar laser, consiste à envoyer vers la cible un rayonnement de longueur d'ondes périodiquement variable, à partir d'une source monomode de lumière cohérente alimentée par un signal de puissance variable, placée au point de référence, à recueillir le rayonnement rétrodiffusé par la cible, à le réinjecter dans la cavité de la source de lumière et à recueillir sur un photodétecteur placé à l'arrière de la source, le battement entre le rayonnement rétrodiffusé et le rayonnement issu de la source.

Le battement dont la fréquence est proportionnelle au retard de l'onde rétrodiffusée est représentatif de la distance entre la source et la cible.

Dans le cas du contrôle de dimension de l'alésage d'un élément de guidage, ce procédé peut être mis en oeuvre en utilisant une sonde 47 telle que représentée sur la figure 8 reliée à un module électronique d'alimentation et de traitement 63.

La sonde 47 comporte, à l'intérieur d'une enveloppe tubulaire, une diode laser 50 constituant la source de lumière cohérente reliée par des conducteurs 51 au module d'alimentation et de traitement électronique 63 disposé dans le corps 45 de la grappe de contrôle et un miroir optique 52 fixé sur un support 53 monté mobile en rotation autour d'un axe parallèle à l'axe du support tubulaire 45 constituant l'axe de la sonde 47.

Le support rotatif 53 est relié par l'intermédiaire d'un flexible 54, à un pignon d'entraînement 55 en prise avec un pignon 56 fixé sur l'arbre de sortie d'un motoréducteur 57.

Un codeur 58 est associé au motoréducteur 57, de manière à fournir des indications très précises sur la position angulaire du support 53 et du miroir 52 assurant la réflexion du rayonnement vers une zone de l'alésage intérieur des moyens de guidage qui peut être ainsi déterminée avec précision, à chaque instant pendant les mesures.

Le motoréducteur 57 et le codeur 58 sont reliés à un câble 59 comportant des conducteurs permettant d'assurer l'alimentation du motoréducteur 57 et le retour des informations du codeur 58.

Le module électronique 63 est relié à un câble 60 comportant des conducteurs permettant d'assurer l'alimentation du module en courant électrique et le retour des informations de la sonde 47 provenant d'un photodétecteur associé à cette sonde.

Les câbles 59 et 60 passent à l'intérieur d'une même gaine pour constituer le câble général d'alimentation et de recueil de mesure 12.

Pendant les mesures à l'intérieur de l'alésage d'un élément de guidage d'un tube-guide, le miroir 52 de la sonde est mis en rotation à l'intérieur de l'enveloppe de la sonde 47, par l'intermédiaire du flexible 54 et du motoréducteur 57.

La diode laser 50 est alimentée par le module électronique 63, de manière à diriger vers le miroir un rayonnement de longueur d'onde périodiquement variable. L'enveloppe de la sonde 47 comporte une fenêtre 61, en vis-à-vis du miroir 52 sur toute la périphérie de la sonde.

On peut ainsi réaliser un balayage de l'alésage de l'élément de guidage dans lequel est introduite la sonde 47 sur toute sa périphérie, de manière à effectuer un contrôle dimensionnel précis de cet alésage, grâce à la mesure par radar laser de la distance entre la source de rayonnement lumineux et la paroi de l'alésage permettant d'obtenir une mesure des variations de la distance entre la paroi de l'alésage et l'axe de la sonde, pendant la rotation de la sonde.

Les signaux de mesure sont traités par le module électronique 63 et envoyés par le câble 60 sur un dispositif d'affichage et/ou d'enregistrement disposé au-dessus du niveau de la piscine du réacteur.

Il est à remarquer que dans le cas de l'utilisation d'une sonde 47 telle que décrite, seule une partie de la sonde constituée par le miroir est montée rotative sur le support du dispositif de contrôle.

Au lieu d'une sonde utilisant le principe du radar laser, on peut utiliser une sonde d'un autre type, par exemple une sonde constituée par un transducteur à ultrasons ou par un capteur à courants de Foucault.

Dans certains cas, il est possible de faire tourner l'ensemble de la sonde autour de son axe au lieu de ne mettre en rotation qu'une partie de cette sonde pour réaliser un balayage de la périphérie interne de l'alésage à contrôler.

La dénomination "sonde montée rotative" mentionnée plus haut couvre aussi bien le cas d'une sonde montée rotative dans son ensemble que le cas d'une sonde comportant un élément rotatif pour réaliser le balayage.

Comme il est visible sur la figure 8, la grappe de contrôle 10 comporte de plus une butée escamotable 62 permettant d'arrêter la grappe de contrôle 10, en position de contrôle d'un élément de guidage, lors de ses déplacements dans la direction axiale à l'intérieur d'un tube-guide.

Dans sa position extraite, la butée 62 est en saillie par rapport à la surface extérieure du corps 45 dont le diamètre extérieur est légèrement inférieur au diamètre de l'espace libre central des cartes de guidage et des moyens de guidage continu d'un tube-guide.

Lors des déplacements de la grappe de contrôle 10 à l'intérieur d'un tube-guide, la butée 62 peut venir en appui successivement sous chacune des cartes de guidage, de manière à assurer l'arrêt de la grappe de contrôle 10 en position de contrôle des ouvertures de guidage de la carte.

Après contrôle des ouvertures de guidage d'une carte de guidage, on escamote la butée 62 par commande à distance, de manière à faire passer cette butée à travers l'espace libre central de la carte qui vient d'être contrôlée. La butée escamotable est ensuite relâchée de manière à revenir dans sa position en saillie et à réaliser l'arrêt de la grappe de contrôle au niveau de la carte de guidage suivante.

On peut ainsi réaliser de proche en proche, le contrôle de toutes les cartes de guidage de la partie de guidage discontinu du tube-guide.

Dans la partie de guidage continu du tube-guide, on effectue le contrôle en maintenant la butée 62 dans sa position escamotée.

Il est bien évident que la butée escamotable 62 peut être remplacée par un détecteur tel qu'un capteur inductif ou à courants de Foucault ou par un microcontacteur permettant soit de détecter de manière précise le passage des sondes de mesure au niveau des zones à contrôler soit de réaliser automatiquement l'arrêt de la grappe de contrôle au niveau de chacune des zones de mesure.

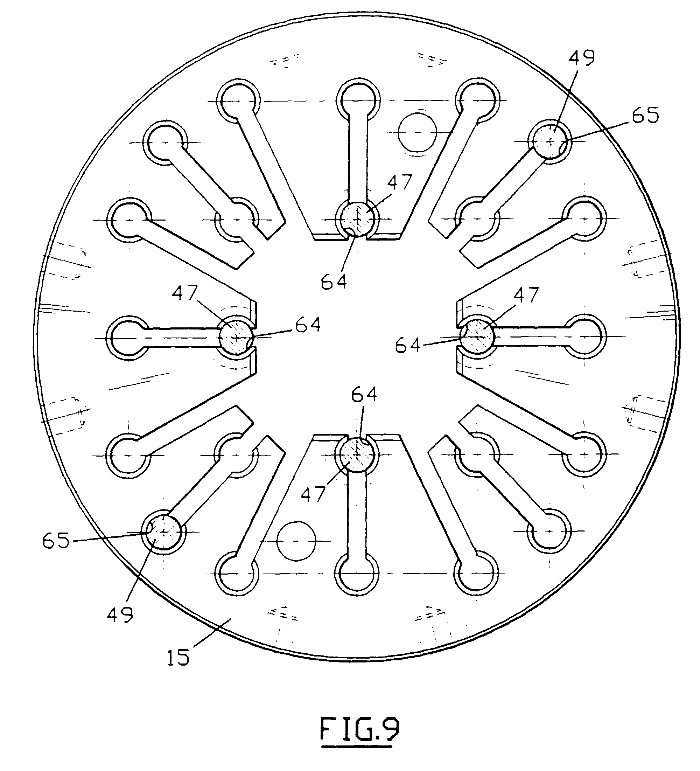

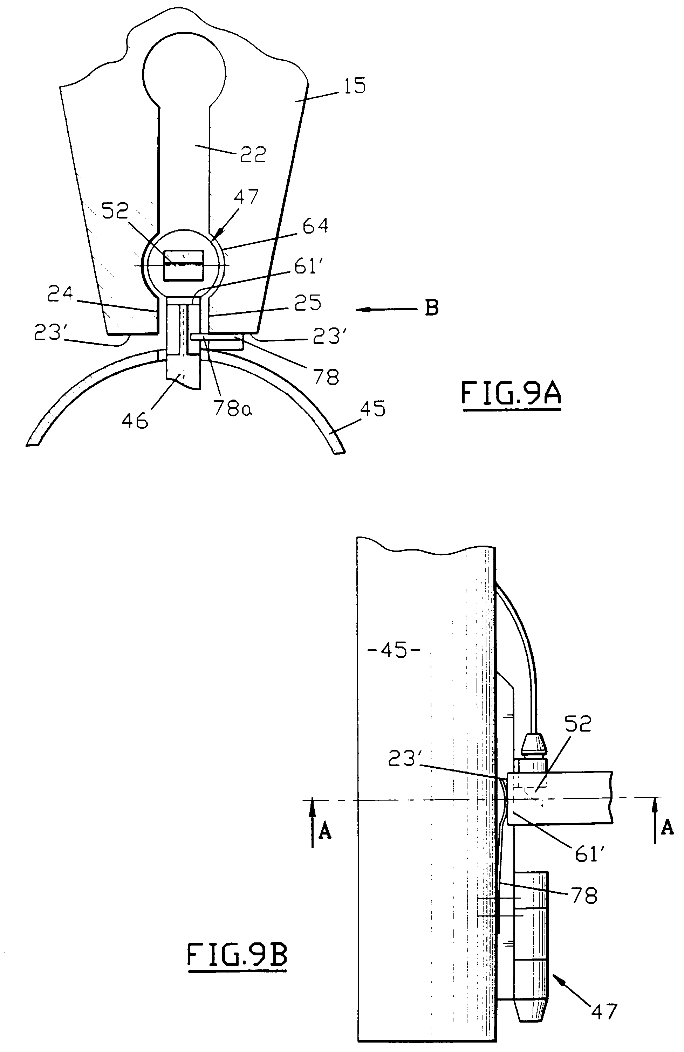

Sur la figure 9, on a représenté une carte de guidage 15 comportant quatre ouvertures de guidage intérieures 64 disposées à 90° les unes des autres autour de l'axe du tube-guide qui peuvent être contrôlées simultanément en utilisant la grappe de contrôle telle que représentée sur les figures 6 et 7.

Lorsque la grappe de contrôle 10 est déplacée axialement à l'intérieur d'un tube-guide comportant des cartes de guidage telles que la carte 15, les sondes 47 de la grappe de contrôle 10 traversent simultanément les quatre ouvertures de guidage 64 de la carte de guidage.

Les barres de guidage 49 sont introduites dans deux ouvertures externes 65 de la carte de guidage, de manière à assurer un positionnement précis des sondes de mesure 47 dans les ouvertures intérieures 64.

Le contrôle des ouvertures intérieures telles que 64 des cartes de guidage et des alésages intérieurs des fourreaux de guidage de la partie de guidage continu du tube-guide tels que représentés sur la figure 4 présente une importance primordiale, de sorte que dans certains cas, ce contrôle des ouvertures et alésages de guidage intérieurs peut être suffisant.

Sur les figures 9A et 9B, on a représenté les éléments d'une grappe de contrôle du type décrit plus haut en regard des figures 6, 7 et 8, permettant de réaliser l'étalonnage de la sonde, sa mise en place précise dans les éléments de guidage de la carte 15 et des mesures de référence sur des surfaces de la carte de guidage non soumises à l'usure en service.

Un ressort 78 est fixé sur le corps cylindrique 45 de la grappe de contrôle de manière à venir en appui sur une partie 23' de la surface interne de l'alésage 17 de la carte de guidage 15 pour assurer une mise en place précise de la sonde 47 dans l'ouverture de guidage 64 de la carte de guidage. Le ressort 78 comporte une partie centrale 78a tangente à la partie de référence 23' de la carte de guidage prolongée en direction du bras 46 de la sonde 47 de manière à fournir une face de référence pour la sonde de mesure 47 exactement dans le plan de la partie 23' de l'alésage interne de la carte de guidage 1.

En outre, la sonde 47 définit une surface d'étalonnage 61' dirigée vers l'intérieur, c'est-à-dire à l'opposé de l'ouverture de guidage 64, au niveau de la lumière 61 de la sonde 47.

A chaque tour du miroir 52 la surface d'étalonnage 61' est balayée par le faisceau laser de sorte qu'une mesure relative à un élément fixe peut être effectuée pour réaliser l'étalonnage de la sonde.

En outre, les faces 24 et 25 de la fente 22 de la carte de guidage 15 et les faces 23' d'extrémité de la fente repérées par la position de la partie 78a du ressort 78 permettent de recadrer les mesures, du fait que ces faces 23', 24 et 25 ne subissent pas d'usure dans le réacteur en service et constituent des surfaces de référence.

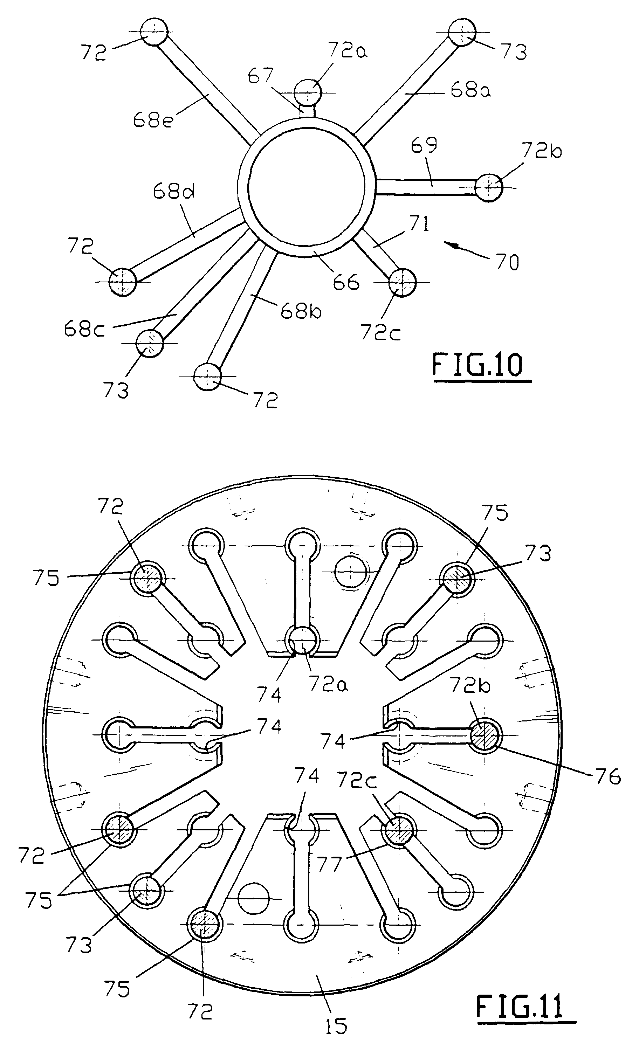

Comme il est visible sur les figures 10 et 11, on peut également utiliser une grappe de contrôle permettant de réaliser le contrôle de toutes les ouvertures des cartes de guidage et de tous les alésages des fourreaux et des tubes de la zone de guidage continu, par des passages successifs de la grappe de contrôle dans le tube-guide séparés par une rotation de la grappe autour de son axe.

Comme il est visible sur la figure 10, la grappe de contrôle 70 comporte un support tubulaire 66 et huit bras de direction radiale par rapport au support tubulaire 66 dont l'extrémité extérieure porte soit une sonde de mesure 72 soit une barre de guidage 73.

Le bras 67 qui est de plus faible longueur porte une sonde 72a qui est susceptible de venir se placer en position de contrôle à l'intérieur d'une ouverture intérieure 74 d'une carte de guidage 15, comme représenté sur la figure 11.

Les bras 68a, 68b, 68c, 68d et 68e de plus grande longueur portent à leur extrémité externe opposée au support 66, une sonde de mesure 72, en ce qui concerne les bras 68b, 68d et 68e et une barre de guidage 73 en ce qui concerne les bras 68a et 68c.

Le bras 69 d'une longueur un peu inférieure à la longueur des bras 68a, ..., 68e porte une sonde de mesure 72b.

Enfin, le bras 71 dont la longueur est intermédiaire entre la longueur du bras 67 et la longueur du bras 69 porte une sonde de mesure 72c.

Comme il est visible sur la figure 11, lorsque la grappe de contrôle 70 est en position à l'intérieur d'un tube-guide, dans la partie discontinue de ce tube-guide, la sonde 72a peut réaliser le contrôle d'une ouverture intérieure 74 de la carte de guidage 15, les trois sondes 72 peuvent réaliser le contrôle de trois ouvertures extérieures 75 de la carte de guidage, la sonde 72b peut réaliser le contrôle d'une ouverture 76 et la sonde 72c d'une ouverture 77.

Les barres de guidage 73 sont engagées dans deux ouvertures extérieures 75.

La grappe de contrôle 70 permet donc de réaliser simultanément le contrôle de six ouvertures (ou de six alésages dans la partie continue du tube-guide) situées à des distances différentes de l'axe du tube-guide.

En faisant tourner la grappe de contrôle 70 de 90° autour de l'axe du support 66, entre deux passages de la grappe à l'intérieur du tube-guide suivant toute sa longueur, on assure le contrôle de six nouvelles séries d'ouvertures des cartes de guidage (ou de six nouveaux alésages de la partie de guidage continue du tube-guide) du fait que la disposition des ouvertures des cartes de guidage est symétrique par rapport à deux diamètres de la carte de guidage faisant entre eux un angle de 90°.

Le contrôle de toutes les ouvertures des cartes de guidage (ou de tous les alésages de la partie continue) d'un tube-guide peut être réalisé en quatre passages séparés par une rotation de 90° de la grappe de contrôle autour de son axe.

La rotation de la grappe de contrôle peut être effectuée sur le chariot porteur 9 à l'aplomb du tube-guide dont on réalise le contrôle.

En se reportant à l'ensemble des figures, on va maintenant décrire une opération de contrôle d'un tube-guide des équipements internes supérieurs 4 d'un réacteur nucléaire en position sur leur stand de contrôle 3 dans la piscine du réacteur.

Le chariot porteur 9 équipé d'une grappe de contrôle d'un type déterminé en fonction du contrôle à réaliser est descendu sur le fond 2 de la piscine 1.

La grappe de contrôle peut être par exemple du type représenté sur les figures 6 et 7 ou du type représenté sur la figure 10.

Les sondes et le chariot porteur 9 sont reliés à un poste de contrôle et de commande situé au-dessus du niveau supérieur de la piscine, par l'ensemble de câbles 12.

Le chariot est déplacé sur le fond de la piscine de manière contrôlée grâce à la caméra vidéo 43 permettant de visualiser un quadrillage tracé sur le fond de la piscine.

Le chariot est arrêté dans une position telle que la grappe de contrôle 10 soit à l'aplomb d'un tube-guide prédéterminé 8'.

Le vérin 42 est commandé de manière à engager la tête de centrage 41 sur des pions de la plaque supérieure de coeur 6 constituant la partie inférieure des équipements internes.

On obtient ainsi une mise et un maintien en position du chariot porteur 9 et de la grappe de contrôle 10.

Une perche ou une tige de commande 11 est introduite dans la partie supérieure 8'a du tube-guide 8', depuis la passerelle située au niveau supérieur de la piscine 1 du réacteur.

La perche ou tige de commande 11 est descendue dans la partie centrale du tube-guide, de manière à venir en saillie en-dessous de la plaque supérieure de coeur 6 pour s'engager à l'intérieur du pommeau 10a de la grappe de contrôle 10.

Par simple poussée sur la perche ou tige de commande, on assure la fixation de la grappe de contrôle 10 à la perche 11.

On déplace la perche 11 dans la direction verticale suivant l'axe du tube-guide 8', de manière que la grappe de contrôle 10 vienne s'engager dans le tube-guide 8' par sa partie inférieure.

Les sondes de contrôle sont alimentées et mises en rotation. On réalise le contrôle de la partie continue du tube-guide puis, successivement, le contrôle de chacune des cartes de guidage de la partie de guidage discontinue du tube-guide.

Les mesures effectuées par les sondes et la position angulaire de la sonde au cours des mesures sont transmises au poste de contrôle et de commande au-dessus de la piscine du réacteur, par l'intermédiaire des câbles reliés au module électronique 63 et aux sondes 47.

Après avoir réalisé le balayage du tube-guide 8' sur toute sa longueur par déplacement de la grappe de contrôle 10 dans la direction axiale, de bas en haut, on redescend la grappe de contrôle 10 jusqu'à sa position de départ sur le support 36 du chariot 9, la grappe 10 étant toujours fixée à la perche 11.

Dans le cas d'un contrôle effectué en utilisant une grappe de contrôle tel que représentée sur les figures 6 et 7, on sépare la perche de la grappe de contrôle et on déplace le chariot 9 et la grappe de contrôle vers un nouveau tube-guide à contrôler, après avoir séparé la tête de centrage 41 des pions de positionnement de la plaque supérieure de coeur 6.

Dans le cas d'une grappe de contrôle telle que la grappe de contrôle 70 représentée sur la figure 10, on fait tourner la grappe 70 d'un quart de tour sur le chariot avant de réaliser un second déplacement suivant toute la longueur du tube-guide.

Comme indiqué plus haut, le contrôle de l'ensemble des ouvertures et alésages du tube-guide est réalisé au cours de quatre déplacements successifs de la grappe de contrôle 70 suivant toute la longueur du tube-guide, la grappe de contrôle étant tournée de 90° entre deux déplacements successifs à l'intérieur du tube-guide.

Pendant le déplacement de la grappe de contrôle de haut en bas à l'intérieur du tube-guide, pour son retour sur le chariot 9, le tireur-pousseur 38 assure une mise en tension continue de l'ensemble de câbles 12, de sorte qu'on évite tout blocage lors du déplacement vers le bas de la grappe de contrôle.

Le dispositif suivant l'invention permet donc de réaliser de manière très précise le contrôle des ouvertures et alésages des tubes-guides des équipements internes supérieurs d'un réacteur nucléaire à eau sous pression en utilisant un dispositif simple, rigide et parfaitement guidé à l'intérieur du tube-guide.

De plus, le contrôle qui est effectué depuis la partie inférieure des équipements internes ne nécessite aucun démontage pour le passage des moyens de contrôle.

L'invention ne se limite pas au mode de réalisation qui a été décrit.

C'est ainsi qu'on peut envisager d'utiliser des grappes de contrôle comportant des sondes de mesure et des barres de guidage ayant des dispositions différentes de celles qui ont été décrites et en nombres différents.

Bien que les sondes permettant des mesures de distance par la méthode du radar laser présentent des avantages importants, en ce qui concerne la précision des mesures, il est possible d'utiliser des sondes fonctionnant sur un autre principe et par exemple des sondes à ultrasons ou à courants de Foucault, pour effectuer les mesures de distance.

L'invention s'applique de manière générale au contrôle des éléments de guidage des équipements internes supérieurs d'un réacteur nucléaire.

## Revendications

1. Dispositif de contrôle des éléments de guidage (15, 30, 31) de tubes-guides (8, 8') des équipements internes supérieurs (4) d'un réacteur nucléaire à eau sous pression disposés sous eau dans une piscine (1), les éléments de guidage (15, 30, 31) comportant, à l'intérieur des tubes-guides (8, 8') ayant un axe vertical en position de contrôle, des ouvertures de guidage (18, 19, 20, 64; 74, 75) traversant des plaques horizontales (15) disposées de manière espacée les unes des autres dans la direction axiale de chaque tube-guide (8, 8') et des alésages (28, 29, 31) de fourreaux tubulaires à axe vertical, les ouvertures et les alésages (18, 19, 20, 28, 29, 31, 64; 74, 75) étant alignés suivant une pluralité de directions axiales verticales, le dispositif comprenant une grappe de contrôle (10; 70) comportant :
- un pommeau d'accrochage (10a) à une perche de manoeuvre (11),
- un corps cylindrique (45; 66) dont le diamètre est inférieur au diamètre de l'alésage central (17, 27) du tube-guide (8, 8'),
- une pluralité de bras de direction radiale (46; 67, 68b, 68d, 68e, 69, 71) fixés autour du corps cylindrique (45; 66) dans des positions angulaires et axiales déterminées et portant chacun par une partie d'extrémité opposée au corps cylindrique (45, 66) une sonde de contrôle (47; 72) montée mobile en rotation sur le bras (46; 67, 68, 69), autour d'un axe parallèle à l'axe du tube-guide, les sondes de contrôle (47; 72) étant disposées de manière à pouvoir être déplacées dans la direction axiale à l'intérieur des ouvertures et des alésages des éléments de guidage (18, 19, 20, 28, 29, 31, 64; 74, 75) du tube-guide (8, 8') par déplacement de la grappe de contrôle (10; 70) fixée à la perche de manoeuvre (11), et
- des moyens (54-57) de mise en rotation des sondes (47; 72).

2. Dispositif de contrôle suivant la revendication 1, caractérisé par le fait qu'il comporte de plus, au moins deux barres de guidage cylindriques (49; 73) fixées chacune à l'extrémité opposée au corps cylindrique d'un bras de direction radiale (46, 48; 67, 68a, 68c) solidaire du corps cylindrique.

3. Dispositif de contrôle suivant l'une quelconque des revendications 1 et 2, caractérisé par le fait que les sondes de contrôle (47; 72) comportent chacune une diode laser (50) et un miroir optique (52) monté rotatif autour d'un axe de la sonde parallèle à l'axe du corps cylindrique (45) de la grappe de contrôle (10), de manière à intercepter le rayonnement provenant de la diode laser (50) et à balayer la surface intérieure des ouvertures et alésages (18, 19, 20, 28, 29, 31, 64; 74, 75) des éléments de guidage du tube-guide (8, 8'), avec le rayonnement et à renvoyer vers la diode (50) le rayonnement réfléchi par la surface des ouvertures et alésages des éléments de guidage du tube (8, 8').

4. Dispositif de contrôle suivant la revendication 3, caractérisé par le fait qu'il comporte de plus un module électronique (63) fixé à l'intérieur du corps cylindrique (45) de la grappe de contrôle (10) comportant des moyens de traitement des signaux provenant de la diode laser (50) associée à un photodétecteur.

5. Dispositif de contrôle suivant l'une quelconque des revendications 3 et 4, caractérisé par le fait que le miroir (52) est fixé sur un support (53) solidaire d'une extrémité d'un flexible (54) dont l'extrémité opposée est solidaire d'un pignon d'entraînement (55) entraîné en rotation par un motoréducteur (57) disposé à l'intérieur du corps cylindrique (45) de la grappe de contrôle (10).

6. Dispositif de contrôle suivant l'une quelconque des revendications 1 à 5, caractérisé par le fait qu'un moyen d'arrêt (62) de la grappe de contrôle (10) au niveau des plaques horizontales (15) des éléments de guidage est monté sur le corps cylindrique (45) de la grappe de contrôle (10).

7. Dispositif de contrôle suivant l'une quelconque des revendications 1 à 6, caractérisé par le fait que le corps cylindrique (45) porte au voisinage de chacun des bras (46) un ressort (78) de positionnement contre une face (23') d'une plaque (15) traversée par des ouvertures de guidage (64), ayant une partie (78a) constituant une surface de référence pour une sonde de mesure (47).

8. Dispositif suivant l'une quelconque des revendications 2 à 7, caractérisé par le fait que la grappe de contrôle (10) comporte quatre bras (46), placés sensiblement à 90° les uns des autres autour du corps cylindrique (45) de la grappe de contrôle (10), portant chacun une sonde de contrôle (47) et deux paires de bras (48) de plus grande longueur dans la direction radiale que les bras (46) disposés dans le prolongement l'un de l'autre de part et d'autre du corps (45) de la grappe de contrôle (10) portant à leurs extrémités deux barres de guidage (49) de direction axiale.

9. Dispositif de contrôle selon l'une quelconque des revendications 2 à 7, caractérisé par le fait que la grappe de contrôle (70) comporte une pluralité de bras (67, 68, 69, 71) de longueurs différentes répartis autour du corps cylindrique (66) de la grappe (70), deux paires de bras (68a, 68c) de plus grande longueur portant à leurs extrémités des barres de guidage (73) de direction axiale et les autres bras (67, 68b, 68d, 68e, 69, 71) portant des sondes de mesure (72).

10. Dispositif de contrôle selon l'une quelconque des revendications 8 et 9, caractérisé par le fait que les barres de guidage (49, 73) ont une longueur axiale supérieure à la distance séparant deux plaques horizontales successives (15) percées d'ouvertures des éléments de guidage (15, 30, 31) du tube-guide (8, 8').

11. Dispositif de contrôle selon l'une quelconque des revendications 1 à 10, caractérisé par le fait qu'il comporte de plus un chariot (9) mobile sur le fond (2) de la piscine (1) portant un support (36) de la grappe de contrôle (10) en position verticale et la perche de manoeuvre (11) portant à son extrémité des moyens d'accrochage au pommeau (10a) de la grappe de contrôle (10).

12. Dispositif de contrôle suivant la revendication 11, caractérisé par le fait que le chariot (9) comporte une tête (41) mobile verticalement comportant des ouvertures d'engagement sur des pions de centrage de la partie inférieure (6) des équipements internes supérieurs (4), de manière à assurer un positionnement précis du chariot mobile (9) sous les équipements internes (4) dans la piscine (1).

13. Dispositif de contrôle selon l'une quelconque des revendications 11 et 12, caractérisé par le fait que le chariot mobile (9) porte des moyens de guidage (39, 39') et des moyens de déplacement (38) d'un ensemble de câbles (12) relié à la grappe de contrôle (10) à l'une de ses extrémités et à un poste de contrôle et de commande au-dessus de la piscine (1) à son autre extrémité.

14. Dispositif de contrôle selon l'une quelconque des revendications 11, 12 et 13, caractérisé par le fait que le chariot mobile (9) porte des caméras (43, 44) de visualisation du fond (2) de la piscine (1) et de la partie supérieure de la grappe de contrôle (10) en position verticale sur le chariot mobile (9).

15. Procédé de contrôle des éléments de guidage (15, 30, 31) d'un tube-guide (8, 8') des équipements internes supérieurs (4) d'un réacteur nucléaire à eau sous pression disposés sous eau dans une piscine (1), les éléments de guidage (18, 19, 20, 28, 29, 31, 64; 74, 75) comportant à l'intérieur de tubes-guides (8, 8') ayant un axe vertical en position de contrôle, des ouvertures de guidage (18, 19, 20, 64; 74, 75) traversant des plaques horizontales (15) disposées de manière espacée les unes des autres dans la direction axiale du tube-guide (8, 8') et des alésages (28, 29, 31) de fourreaux tubulaires à axe vertical, les ouvertures et les alésages (18, 19, 20, 28, 29, 31, 64; 74, 75) étant alignés suivant une pluralité de directions axiales verticales, en utilisant une grappe de contrôle (10; 70) comportant un pommeau d'accrochage (10a, 45a) à une perche de manoeuvre (11), un corps cylindrique (45) dont le diamètre est inférieur au diamètre de l'alésage central libre du tube-guide (8, 8') et une pluralité de bras de direction radiale (46) fixés autour du corps cylindrique (45) dans des positions angulaires et axiales déterminées portant chacun une sonde de contrôle rotative (47) autour d'un axe parallèle à l'axe du tube-guide et des moyens (54-57) de mise en rotation des sondes (47; 72), le procédé de contrôle comportant les étapes suivantes :
- on dispose en-dessous et à l'aplomb d'un tube-guide (8') des équipements internes (4), la grappe de contrôle (10) dont les sondes de contrôle (47; 72) sont disposées de manière à pouvoir être déplacées dans la direction axiale verticale à l'intérieur des éléments de guidage (15, 30, 31) du tube-guide (8, 8'),
- on introduit une perche de manoeuvre (11) à l'intérieur du tube-guide (8') par son extrémité supérieure,
- on effectue la liaison entre une extrémité de la perche de manoeuvre (11) et le pommeau d'accrochage (10a) de la grappe de contrôle (10) en-dessous des équipements internes (4),
- on déplace la grappe de contrôle (10) de bas en haut à l'intérieur du tube-guide (8') par levage de la perche de manoeuvre (11), et
- on effectue le contrôle des éléments de guidage avec les sondes de contrôle rotatives (47) pendant le déplacement de bas en haut de la grappe de contrôle (10) à l'intérieur du tube-guide (8').

16. Procédé de contrôle suivant la revendication 15, caractérisé par le fait qu'on fait tourner la grappe de contrôle (10) autour de l'axe de son corps cylindrique (45) d'un certain angle, en-dessous des équipements internes (4) entre deux opérations successives de déplacement de bas en haut de la grappe de contrôle (10) à l'intérieur du tube-guide (8') et de contrôle à l'intérieur du tube-guide (8').

17. Procédé de contrôle suivant l'une quelconque des revendications 15 et 16, caractérisé par le fait qu'on effectue le contrôle des éléments de guidage (15, 30, 31) par une méthode de mesure de distance par radar laser.

## Patentansprüche

1. Vorrichtung zum Kontrollieren der Führungselemente (15, 30, 31) von Führungsrohren (8, 8') der oberen Einbauten (4) eines Druckwasserkernreaktors, die unter Wasser in einem Becken (1) angeordnet sind, wobei die Führungselemente (15, 30, 31) innerhalb der Führungsrohre (8, 8'), die in der Kontrollposition eine vertikale Achse haben, umfassen:
Führungsöffnungen (18, 19, 20, 64; 74, 75), die durch horizontale Platten (15) verlaufen, welche voneinander in Axialrichtung eines jeden Führungsrohrs (8, 8') beabstandet angeordnet sind, sowie Bohrungen von rohrförmigen Hülsen mit vertikaler Achse, wobei die Öffnungen und die Bohrungen (18, 19, 20, 28, 29, 31, 64; 74, 75) entlang einer Mehrzahl von vertikalen Axialrichtungen ausgerichtet sind, wobei die Vorrichtung ein Kontrollbündel (10; 70) umfaßt, welches aufweist:
- eine Nabe (10a) zum Aufhängen an einer Stellstange (11),
- einen zylindrischen Körper (45; 66), dessen Durchmesser kleiner als der Durchmesser der zentralen Bohrung (17, 27) des Führungsrohrs (8, 8') ist,
- eine Mehrzahl von radial orientierten Armen (46; 67, 68b, 68d, 68e, 69, 71), die um den zylindrischen Körper (45; 66) herum in bestimmten Winkelpositionen und Axialpositionen befestigt sind und jeweils an einem vom Zylinderkörper (45; 66) abgewandten Endbereich eine Kontrollsonde (47); 72) tragen, die am Arm (46; 67, 68, 69) um eine zur Achse des Führungsrohrs parallele Achse drehbeweglich montiert ist, wobei die Kontrollsonden (47; 72) so angeordnet sind, daß sie in Axialrichtung innerhalb der Öffnungen und Bohrungen der Führungselemente (18, 19, 20, 28, 29, 31, 64; 74, 75) des Führungsrohrs (8, 8') durch Verschieben des an der Stellstange (11) befestigten Kontrollbündels (10; 70) bewegbar sind, und
- Einrichtungen (54-57) zum Indrehungversetzen der Sonden (47; 72).

2. Kontrollvorrichtung nach Anspruch 1,
dadurch gekennzeichnet, daß sie ferner wenigstens zwei zylindrische Führungsstäbe (49; 73) umfaßt, die jeweils an einem vom zylindrischen Körper abgewandten Ende eines mit dem zylindrischen Körper fest verbundenen radial orientierten Armes (46, 48; 67, 68a, 68c) befestigt sind.

3. Kontrollvorrichtung nach einem der Ansprüche 1 und 2,
dadurch gekennzeichnet, daß die Kontrollsonden (47; 72) jeweils eine Laserdiode (50) und einen optischen Spiegel (52) umfassen, der um eine zur Achse des zylindrischen Körpers (45) des Steuerbündels (10) parallele Achse der Sonde drehbar montiert ist, so daß er die von der Laserdiode (50) kommende Strahlung abfängt und die Innenoberfläche der Öffnungen und Bohrungen (18, 19, 20, 28, 29, 31, 64; 74, 75) der Führungselemente des Führungsrohrs (8, 8) mit der Strahlung überstreicht und die von der Oberfläche der Öffnungen und Bohrungen der Führungselemente des Rohrs (8, 8') reflektierte Strahlung zur Diode (50) zurücklenkt.

4. Kontrollvorrichtung nach Anspruch 3,
dadurch gekennzeichnet, daß sie ferner ein elektronisches Modul (63) umfaßt, das innerhalb des zylindrischen Körpers (45) des Kontrollbündels (10) befestigt ist und Einrichtungen zum Verarbeiten der von der mit einem Photodetektor in Beziehung stehenden Laserdiode (50) kommenden Signale umfaßt.

5. Kontrollvorrichtung nach einem der Ansprüche 3 und 4,
dadurch gekennzeichnet, daß der Spiegel (52) an einem Träger (53) befestigt ist, der fest mit einem Ende einer flexiblen Welle (54) verbunden ist, deren gegenüberliegendes Ende mit einem Antriebsritzel (55) fest verbunden ist, das von einem innerhalb des zylindrischen Körpers (45) des Kontrollbündels (10) angeordneten Getriebemotor (57) drehangetrieben wird.

6. Kontrollvorrichtung nach einem der Ansprüche 1 bis 5,
dadurch gekennzeichnet, daß eine Halteeinrichtung (62) zum Anhalten des Kontrollbündels (10) in Höhe der horizontalen Platten (15) der Führungselemente am zylindrischen Körper (45) des Kontrollbündels (10) montiert ist.

7. Kontrollvorrichtung nach einem der Ansprüche 1 bis 6,
dadurch gekennzeichnet, daß der zylindrische Körper (45) in der Nähe eines jeden Armes (46) eine Feder (78) trägt zum Positionieren an einer Fläche (23') einer Platte (15), durch die Führungsöffnungen (64) verlaufen, aufweist, wobei die Feder einen Abschnitt (78a) bestitzt, der eine Referenzoberfläche für eine Meßsonde (47) darstellt.

8. Vorrichtung nach einem der Ansprüche 2 bis 7,
dadurch gekennzeichnet, daß das Kontrollbündel (10) aufweist:
vier Arme (46), die im wesentlichen unter 90° zueinander um den zylindrischen Körper (45) des Kontrollbündels (10) herum angeordnet sind und jeweils eine Kontrollsonde (47) tragen, und zwei Paare von Armen (48), die in radialer Richtung länger als die Arme (46) sind, die jeweils in Verlängerung voneinander an beiden Seiten des Körpers (45) des Kontrollbündels (10) angeordnet sind und an ihren Enden zwei axial ausgerichtete Führungsstäbe (49) tragen.

9. Kontrollvorrichtung nach einem der Ansprüche 2 bis 7,
dadurch gekennzeichnet, daß das Kontrollbündel (70) eine Mehrzahl von um den zylindrischen Körper (66) des Bündels (70) verteilten Armen (67, 68, 69, 71) unterschiedlicher Längen aufweist, wobei zwei Paare von Armen (68a, 68c) von größerer Länge an ihren Enden axial ausgerichtete Führungsstäbe (73) und die anderen Arme (67, 68b, 68d, 68e, 69, 71) Meßsonden (72) tragen.

10. Kontrollvorrichtung nach einem der Ansprüche 8 oder 9,
dadurch gekennzeichnet, daß die Führungsstäbe (49, 73) eine axiale Länge haben, die größer ist als der Abstand zwischen zwei aufeinanderfolgenden horizontalen Platten (15), durch die Öffnungen der Führungselemente (15, 30, 31) des Führungsrohrs (8, 8') gebrochen sind.

11. Kontrollvorrichtung nach einem der Ansprüche 1 bis 10,
dadurch gekennzeichnet, daß sie ferner einen auf dem Boden (2) des Beckens (1) beweglichen Wagen (9) umfaßt, der einen Träger (36) für das Kontrollbündel (10) in vertikaler Position trägt, wobei die Stellstange (11) an ihrem Ende Mittel zum Anhängen der Nabe (10a) des Kontrollbündels (10) trägt.

12. Kontrollvorrichtung nach Anspruch 11,
dadurch gekennzeichnet, daß der Wagen (9) einen vertikal beweglichen Kopf (41) aufweist, der Öffnungen für den Eingriff an Zentrierstiften des unteren Teils (6) der oberen Einbauten (4) umfaßt, um eine genaue Positionierung des beweglichen Wagens (9) unter den oberen Einbauten (4) in dem Becken (1) sicherzustellen.

13. Kontrollvorrichtung nach einem der Ansprüche 11 oder 12,
dadurch gekennzeichnet, daß der bewegliche Wagen (9) Führungseinrichtungen (39, 39') und Bewegungseinrichtungen (38) für eine Anordnung von Kabeln (12) trägt, die an einem ihrer Enden mit dem Kontrollbündel (10) und an ihrem anderen Ende mit einer Kontroll- und Steuerstation oberhalb des Beckens (1) verbunden ist.

14. Kontrollvorrichtung nach einem der Ansprüche 11, 12 oder 13,
dadurch gekennzeichnet, daß der bewegliche Wagen (9) Kameras (43, 44) zum Sichtbarmachen des Bodens (2) des Beckens (1) und des oberen Bereichs des Kontrollbündels (10) in vertikaler Position auf dem beweglichen Wagen (9) umfaßt.

15. Verfahren zum Kontrollieren der Führungselemente (15, 30, 31) eines Führungsrohrs (8, 8') der oberen Einbauten (4) eines Druckwasserkernreaktors, die unter Wasser in einem Becken (1) angeordnet sind, wobei die Führungselemente (18, 19, 20, 28, 29, 31, 64; 74, 75) innerhalb von Führungsrohren (8, 8') mit in Kontrollposition vertikaler Achse umfassen: Führungsöffnungen (18, 19, 20, 64; 74, 75), die durch voneinander in axialer Richtung des Führungsrohrs (8, 8') beabstandete horizontale Platten (15) hindurch verlaufen, und Bohrungen (28, 29, 31) von rohrförmigen Hülsen mit vertikaler Achse, wobei die Öffnungen und die Bohrungen (18, 19, 20, 28, 29, 31, 64; 74, 75) entlang einer Mehrzahl von vertikalen axialen Richtungen ausgerichtet sind, wobei ein Kontrollbündel (10; 70) verwendet wird, welches umfaßt: eine Nabe (10a; 45a) zum Anhängen an eine Stellstange (11), einen zylindrischen Körper (45), dessen Durchmesser kleiner als der Durchmesser der zentralen freien Bohrung des Führungsrohrs (8, 8') ist und eine Mehrzahl von radial orientierten Armen (46), die um den zylindrischen Körper (45) herum in bestimmten Winkelpositionen und axialen Positionen befestigt sind und jeweils eine Kontrollsonde, die um eine zur Achse des Führungsrohrs parallele Achse drehbar ist, sowie Einrichtungen (54-57) zum Indrehungver-setzen der Sonden (47; 72) tragen, wobei das Verfahren folgende Schritte umfaßt:
- Anordnen des Kontrollbündels (10) senkrecht unterhalb eines Führungsrohrs (8') der oberen Einbauten (4), wobei die Kontrollsonden (47; 72) des Kontrollbündels (10) so angeordnet sind, daß sie in vertikaler axialer Richtung innerhalb der Führungselemente (15, 30, 31) des Führungsrohrs (8, 8') bewegbar sind,
- Einführen einer Stellstange (11) ins Innere des Führungsrohrs (8') über sein oberes Ende,
- Herstellen der Verbindung zwischen einem Ende der Stellstange (11) und der Anhängnabe (10a) des Kontrollbündels (10) unterhalb der oberen Einbauten (4),
- Bewegen des Kontrollbündels (10) von unten nach oben innerhalb des Führungsrohrs (8') durch Anheben der Stellstange (11), und
- Durchführen der Kontrolle der Führungselemente mit den drehbaren Kontrollsonden (47) während der Bewegung des Kontrollbündels (10) von unten nach oben innerhalb des Führungsrohrs (8').

16. Kontrollverfahren nach Anspruch 15,
dadurch gekennzeichnet, daß zwischen zwei aufeinanderfolgenden Operationen des Bewegens des Kontrollbündels (10) innerhalb des Führungsrohrs (8') von unten nach oben und des Kontrollierens des Inneren des Führungsrohrs (8') das Kontrollbündel (10) unterhalb der oberen Einbauten (4) um die Achse seines zylindrischen Körpers (45) um einen bestimmten Winkel gedreht wird.

17. Kontrollverfahren nach einem der Ansprüche 15 und 16,
dadurch gekennzeichnet, daß die Kontrolle der Führungselemente (15, 30, 31) durch ein Laserradar-Abstandsmeßverfahren durchgeführt wird.

## Claims

1. Apparatus for inspecting the guide elements (15,30, 31) of guide tubes (8,8') in the upper internal fixtures (4) of a pressurised water nuclear reactor which are arranged underwater in a tank (1), the guide elements (15,30,31) comprising, inside the guide tubes (8,8') having a vertical axis in the inspection position, guide openings (18,19,20,64;74,75) passing through horizontal plates (15) spaced apart from one another in the axial direction of each guide tube (8,8') and bores (28,29,31) of tubular sleeves of vertical axis, the openings and the bores (18,19,20,28,29,31,64;74,75) being aligned in a plurality of vertical axial directions, the apparatus comprising a control cluster (10;70) comprising:
a knob (10a) for attachment to a manoeuvring rod (11),
a cylindrical member (46;66) the diameter of which is less than the diameter of the central bore (17,27) of the guide tube (8,8'),
a plurality of radial arms (46;67,68b,68d,68e,69, 71) fixed around the cylindrical body (45;66) in predetermined angular and axial positions and each bearing, by means of an end portion opposite the cylindrical body (45;66), an inspection probe (47;72) mounted so as to be rotatably movable on the arm (46; 67,68,69), about an axis parallel to the axis of the guide tube, the inspection probes (47;72) being arranged so as to be able to be moved in the axial direction inside the openings and bores of the guide elements (18, 19,20,28,29,31,64;74,75) of the guide tube (8,8') by movement of the control cluster (10;70) fixed to the manoeuvring rod (11), and
means (54-57) for rotating the probes (47;72).

2. Inspection apparatus according to claim 1, characterised in that it further comprises at least two cylindrical guide bars (49;73) each fixed at the end of a radial arm opposite the cylindrical body (46,48;67,68a,68c) which arm is integral with the cylindrical body.

3. Inspection apparatus according to either of claims 1 and 2, characterised in that the inspection probes (47;72) each comprise a laser diode (50) and an optical mirror (52) rotatably mounted about an axis of the probe parallel to the axis of the cylindrical body (45) of the control cluster (10), so as to intercept the radiation from the laser diode (50) and sweep the inner surface of the openings and bores (18,19,20,28,28,29,31,64;74,75) of the guide elements of the guide tube (8,8') with the radiation and to send back, to the diode (50), the radiation reflected by the surface of the openings and bores of the tube guide elements (8,8').

4. Inspection apparatus according to claim 3, characterised in that it further comprises an electronic module (63) fixed inside the cylindrical body (45) of the control cluster (10) comprising means for processing the signals coming from the laser diode (50) associated with a light detector.

5. Inspection apparatus according to either of claims 3 and 4, characterised in that the mirror (52) is fixed to a support (53) integral with one end of a flexible member (54) the opposite end of which is integral with a drive pinion (55) rotationally driven by a stepping down motor (57) arranged inside the cylindrical body (45) of the control cluster (10).

6. Inspection apparatus according to any one of claims 1 to 5, characterised in that means (62) for stopping the control cluster (10) level with the horizontal plates (15) of the guide elements are mounted on the cylindrical body (45) of the control cluster (10).

7. Inspection apparatus according to any one of claims 1 to 6, characterised in that the cylindrical member (45) has, in the vicinity of each arm (46), a spring (78) for positioning against a surface (23') of a plate (15) drilled with guide openings (64), having a part (78a) which constitutes a reference surface for a measuring probe (47).

8. Inspection apparatus according to any one of claims 2 to 7, characterised in that the control cluster (10) has four arms (46) positioned substantially at 90° from one another around the cylindrical member (45) of the control cluster (10), each having an inspection probe (47); and two pairs of arms (48), which are longer in the radial direction than the arms (46), arranged on an extension of one another, either side of the body (45) of the control cluster (10), which have at their ends two axially directed guide bars (49).

9. Inspection apparatus according to any one of claims 2 to 7, characterised in that the control cluster (70) has a plurality of arms (67,68,69,71) of different lengths distributed around the cylindrical body (66) of the cluster (70), two pairs of arms (68a,68c) of greater length having at their ends axially directed guide bars (73) whilst the other arms (67,68b,68d,68e,69,71) have measuring probes (72).

10. Inspection apparatus according to either of claims 8 and 9, characterised in that the guide bars (49;73) have an axial length which is greater than the spacing between two successive horizontal plates (15) drilled with openings for the guide elements (15,30,31) of the guide tube (8,8').

11. Inspection apparatus according to any one of claims 1 to 10, characterised in that it further comprises a carriage (9) which is movable along the bottom (2) of the tank (1), carrying a support (36) for the control cluster (10) in the vertical position, and the manoeuvring rod (11) having at its end means for attachment to the knob (10a) of the control cluster (10).

12. Inspection apparatus according to claim 11, characterised in that the carriage (9) has a vertically movable head (41) comprising openings engaging on centering studs for the lower part (6) of the upper internal fittings (4), so as to ensure accurate positioning of the movable carriage (9) below the internal fittings (4) in the tank (1).

13. Inspection apparatus according to either of claims 11 and 12, characterised in that the movable carriage (9) carries guide means (39,39') and means (38) for moving a set of cables (12) connected to the control cluster (10) at one end and to a control and command post above the tank (1) at the other end.

14. Inspection apparatus according to any one of claims 11, 12 and 13, characterised in that the movable carriage (9) has cameras (43,44) for displaying the bottom (2) of the tank (1) and the upper part of the control cluster (10) in the vertical position on the movable carriage (9).

15. Process for inspecting the guide elements (15,30, 31) of a guide tube (8,8') in the upper internal fittings (4) of a pressurised water nuclear reactor, located underwater in a tank (1), the guide elements (18,19,20,28,29,31,64;74,75) comprising, inside guide tubes (8,8') having a vertical axis in the inspection position, guide openings (18,19,20,64;74,75) passing through horizontal plates (15) spaced apart from one another in the axial direction of the guide tube (8,8') and bores (28,29,31) of tubular sleeves with a vertical axis, the openings and bores (18,19,20,28,29,31,64;74, 75) being aligned in a plurality of vertical axial directions, using a control cluster (10;70) comprising a knob (10a;45a) for attachment to a manoeuvring rod (11), a cylindrical body (45) the diameter of which is less than the diameter of the free central bore of the guide tube (8,8') and a plurality of radial arms (46) fixed around the cylindrical body (45) in predetermined axial and angular positions, each having an inspection probe (47) rotatable about an axis parallel to the axis of the guide tube and means (54-57) for rotating the probes (47;71), the inspection process comprising the following steps:
the control cluster (10) is arranged below and in line with a guide tube (8') of the internal fittings (4), the inspection probes (47;72) of said cluster being arranged so that they can be moved in the vertical axial direction inside the guide elements (15,30,31) of the guide tube (8,8'),
a manoeuvring rod (11) is placed inside the guide tube (8') through its upper end,
one end of the manoeuvring rod (11) is connected to the attachment knob (10a) of the control cluster (10) below the internal fittings (4),
the control cluster (10) is moved upwards inside the guide tube (8') by raising the manoeuvring rod (11), and
the guide elements are inspected with the rotary inspection probes (47) during the upwards movement of the control cluster (10) inside the guide tube (8').

16. Inspection process according to claim 15, characterised in that the control cluster (10) is rotated about the axis of its cylindrical body (45) through a certain angle, below the internal fittings (4) between two successive upwards movements of the control cluster (10) inside the guide tube (8') and inspections inside the guide tube (8').

17. Inspection process according to either of claims 15 and 16, characterised in that the guide elements (15,30, 31) are inspected by a method which comprises measuring distance by means of laser radar.
